# EUROPEAN PATENT SPECIFICATION

(11) **EP 1 001 389 B1**
(45) Date of publication and mention of the grant of the patent: **16.04.2003**
(21) Application number: 99122403.1
(22) Date of filing: 10.11.1999
(51) Int. Cl.: G07F 11/14, A63F 1/14

(54) **Elevator for a card and dispenser for the same**
Hubeinrichtung und Ausgeber für Karten
Dispositif de levage et de distribution de cartes

(30) Priority: 16.11.1998 JP 36375798
(43) Date of publication of application: 17.05.2000
(73) Proprietor: ASAHI SEIKO KABUSHIKI KAISHA, Minato-ku, Tokyo 107-0062 (JP)
(72) Inventor: Yamamiya, Takahito, c/o Iwatsuki factory, Iwatsuki-shi, Saitama (JP)
(74) Representative: Prüfer, Lutz H., Dipl.-Phys.

(56) References cited:
- EP-A- 0 910 054
- FR-A- 2 601 267
- PATENT ABSTRACTS OF JAPAN vol. 1996, no. 5, 31 May 1996 (1996-05-31) & JP 08 020452 A (MEIKO SANGYO KK), 23 January 1996 (1996-01-23)

## Description

This invention relates to a dispenser for sending out cards one by one. Especially, this invention relates to a dispenser for surely sending out cards one by one without damaging the card body having a little thickness. In particular, this invention concerns an equipment for sending out IC cards or cards with manual packed into a transparent film, etc.

In the past, this type of card dispenser was developed in many different ways. For example, a card dispenser of the applicantX of the present application is disclosed in Japanese Utility Model Publication 7-26276 (Japanese Utility Model Application 63-60147). Further, a US Patent based on this Japanese application is granted as US 4,993,587. In the patent specification of this US patent a dispenser for thin cards such as telephone cards, etc. is disclosed. In this equipment, a rubber roller is used in order to send out a thin card. In addition, this equipment is designed such that sending out a pile of thin cards, for example two cards, may be prevented.

As described above, conventional card dispensers are designed considering only thin cards such as telephone cards, etc. However, the conventional card dispensers are not adapted to surely send out little thick cards one by one. For example, IC cards and cards with manual which are packed into transparent films, etc. can not be sent out. In the conventional card dispensers the packaging film, etc. is damaged, since a rubber roller is used.

Further, in conventional dispensers a part storing a plurality of cards or a cassette part is included in the equipment main body. Therefore, design change, etc. have to be made in cases in which size and type of cards, etc. are changed. As a result, improvements are required in view of the management of the many types of dispensers required.

From the FR-A-2 601 267, an elevator for a dispenser of objects is known comprising driving means for moving a movable base by chains in conjunction with a toothed wheel in an upward and downward direction.

It is an object of this invention to provide an elevator and a dispenser for a card body in which thick cards can be surely sent out one by one without damages.

It is a further object of this invention to provide a dispenser for a card body which can be easily loaded with a large number of cards in short time.

These objects are solved by the elevator of claim 1 or by the dispenser of claim 3.

Further developments of the invention are given in the dependent claims.

By the elevator and by the dispenser IC cards packed into transparent films, etc., can be sent out without damages.

By the dispenser the dispensing problems of various cards can be solved and convenience in the management can be achieved.

In the following the invention is explained according to embodiments thereof with reference to the attached drawings.

Fig. 1 is a perspective view which shows a card body dispensing equipment according to an embodiment of the invention.

Fig. 2 is an exploded perspective view which shows a condition in which the cassette is detached from the equipment of Fig. 1.

Fig. 3 is a perspective view having a part cut away which shows the inside of the equipment of Fig. 1.

Fig. 4 is an exploded perspective view which shows the cassette and lift means of Fig. 2.

Fig. 5 is an explanatory view which shows the main section of the lift means which is shown in Fig. 4.

Fig. 6 is a front elevation view which shows the attraction means and delivery means of Fig. 3.

Fig. 7 is an enlarged explanatory view which shows the operating condition of Fig. 5.

Fig. 8 is a perspective view which shows the operating condition of a card body displacement mechanism.

Fig. 9 is a front elevation view which shows a modification of Fig. 6.

Fig. 10 is an explanatory view which shows the operating condition of a main section of Fig. 9.

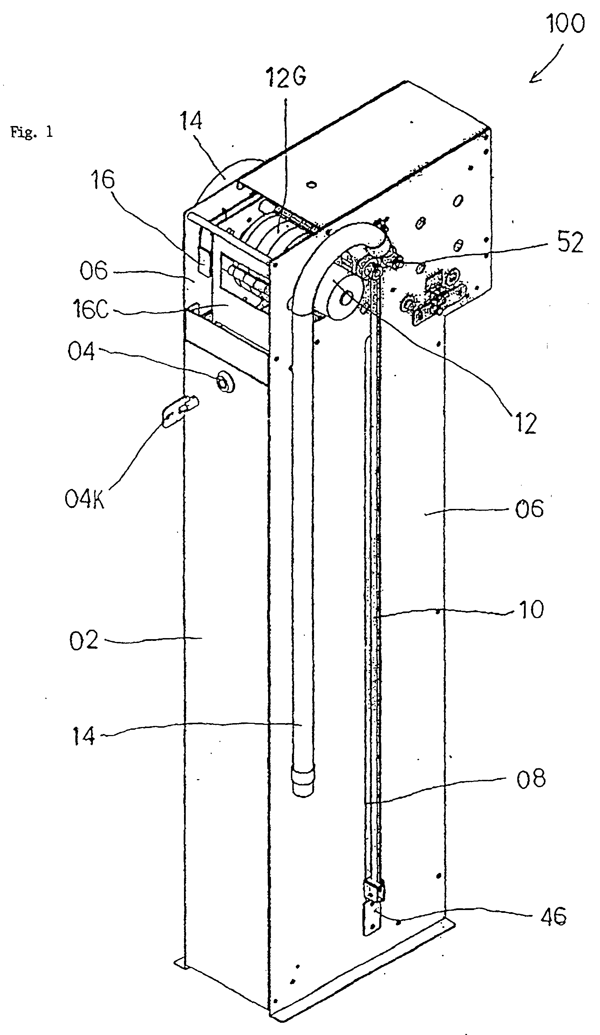

Referring to Fig. 1, a dispenser 100 for a card body is formed as an oblong box according to this embodiment. As shown in Fig. 1 on the left side, a door 2 is formed as a little large oblong board, the door 2 can be opened for storing a cassette. An upper part of the door 2 is provided with a keyhole 4. In order to open and close the door 2 for storing a cassette, a key 4K can be inserted into the keyhole 4. A large fᵢ type board 6 which is shown in Fig. 1 on the right side is a side board and constitutes a part of the dispenser 100. There are provided two such side boards 6 facing each other.

In each of the side boards 6 a great upright long hole 8 is formed in up and down directions. An upright long slender rack 10 is shown in Fig. 1. The rack 10 is made of resin. There are provided two racks 10. The flexible racks 10 constitute a part of the lift means and are able to be moved in up and down directions along the oblong holes 8.

An electric motor 12 for lifting is shown in the upper part of Fig. 1. The motor 12 constitutes an essential part of the lift means, and controls the movement of each rack 10 in the vertical direction. A stick 14 shown in the central part of Fig. 1 is a pipe and stores one flexible rack.

A small lever 16 for operation is shown in the upper left side of Fig. 1. This lever 16 manipulates combination and release between gear mechanism meshing each rack 10 and motor 12 (described later).

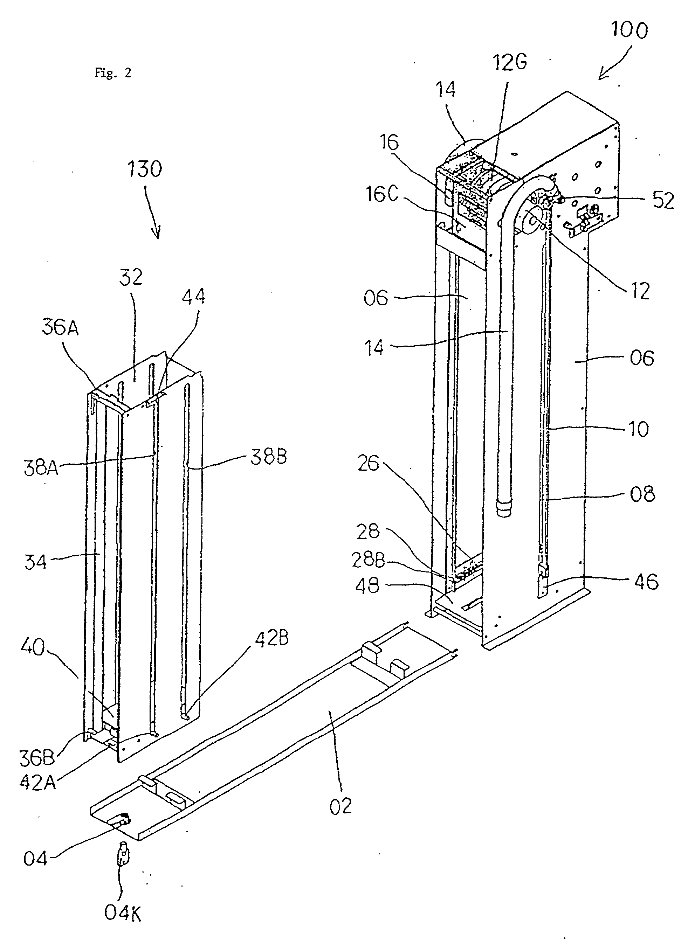

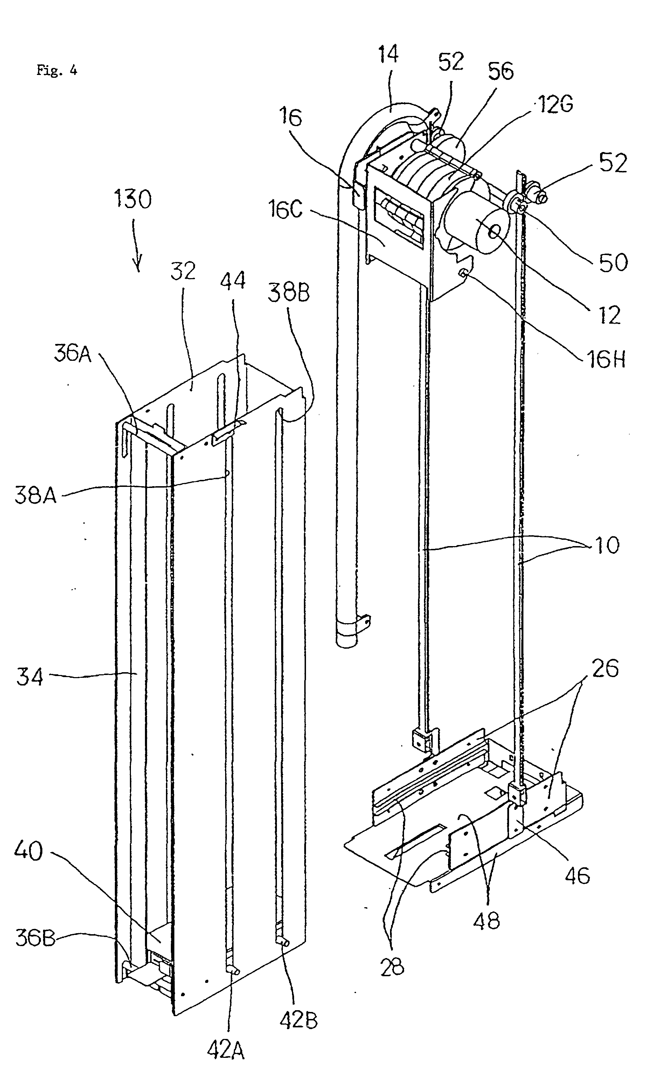

Fig. 2 shows a condition in which the cassette is detached from the dispenser 100. An oblong box 13 is the cassette which is detached as shown in Fig. 2 on the left side. This cassette 130 stores a number of card bodies by piling them up. Further, the cassette 130 is also shown in Fig. 4.

A main body of the cassette is an angular tube, and two sides of the tube facing each other are each provided with oblong holes 38A and 38B. In other words, the main body 32 has two parallel oblong holes 38A and 38B in up and down directions at each of the two sides.

The main body 32 is equipped with a box-like movable base 40 provided inside the main body 32. A plurality of card bodies are piled up and carried on this movable base 40. Two shafts 42A and 42B penetrate into the moveable base 40. The shaft 42A extends into both oblong holes 38 A, and the shaft 42B extends into both oblong holes 38B. Therefore, each end of the shafts 42A and 42B protrudes from the cassette main body 32.

A long square ring board shown on the left side of Fig. 2 is a door 34 of the cassette 130. As shown in the upper and lower part of Fig. 2 there are provided short shafts 36A and 36B. These shafts 36A and 36B are used for detachably fixing the door 34 to the main body 32. The cassette main body 32 is provided with a small plate 44 for switching. When the cassette 130 is installed into the dispenser 100, the plate 44 is used for the stand-by of the dispensing operation.

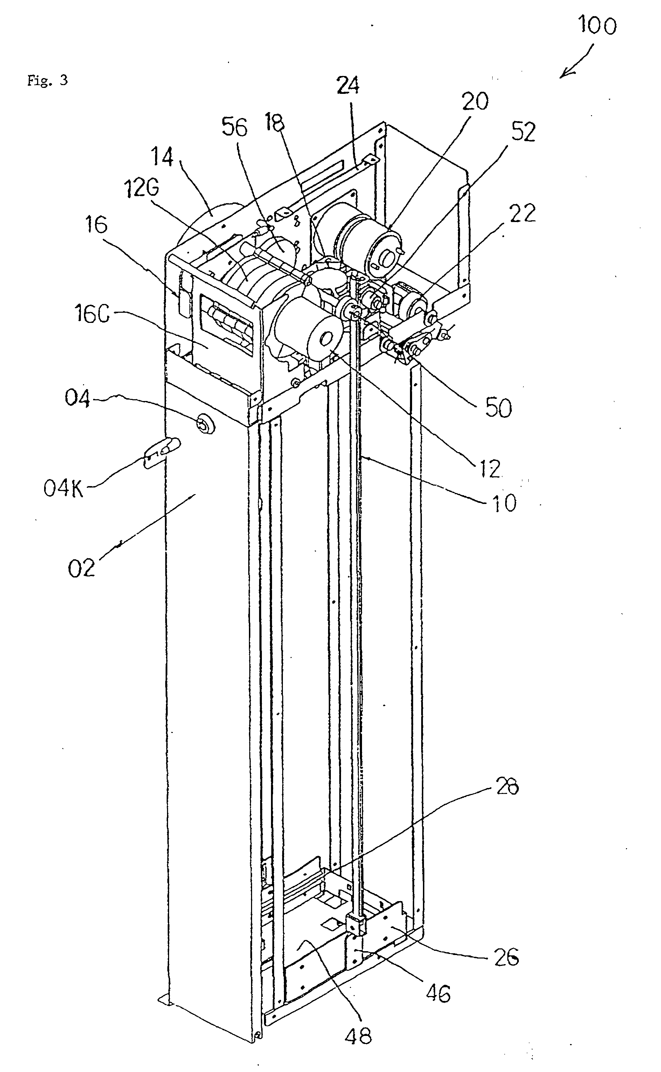

As shown in the upper part of Fig. 3 there is provided a fan 18 for sucking, in particular a fan motor equipment, constituting an attraction means. Further, at the lower part of the fan 18 there is provided a little large opening (not shown) for sucking a card body.

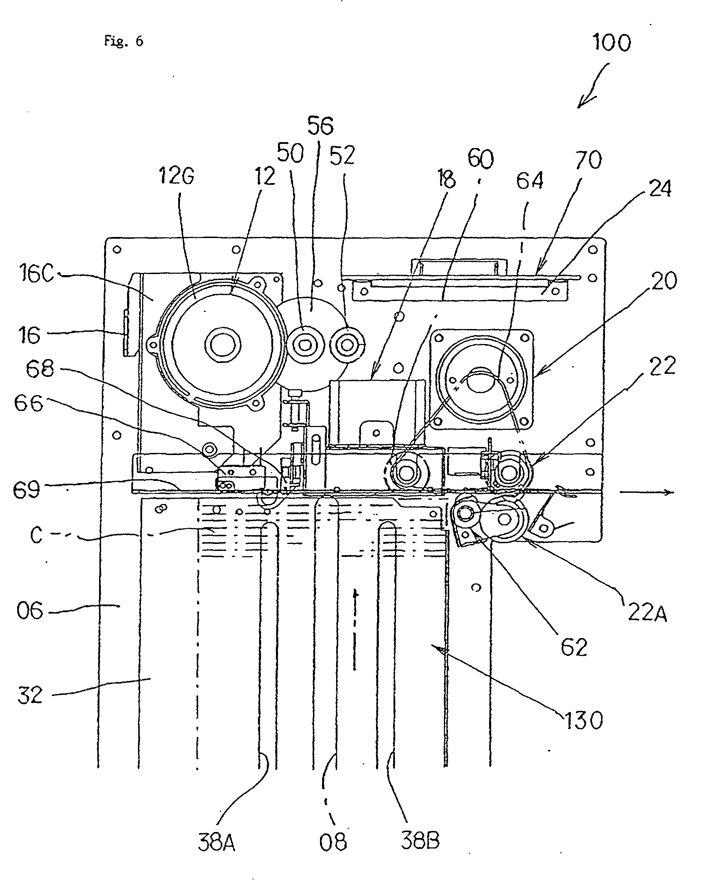

As shown in the upper part of Fig. 3 there is provided an electric motor 20 driving a pair of rollers 20 for sending out. Further, the dispensing rollers 22 contact the upper surface of a card body during the time of dispensing. As shown in the upper part of Fig. 3 there is provided a stationary member 24 used for fixing a substrate 70 which controls electric motors and circuits, etc. (see Fig. 6). As shown in the lower part of Fig. 3 there is provided an U-shaped frame 26 for lifting constituting a part of the lift means, the frame 26 is positioned in a lower position. Paired grooves 28 for leveling are formed at inside walls of the frame 26 facing each other.

Further, the part shown on the right side of Fig. 4 is the lift means. As explained before, this lift means have the frame 26 for lifting, which is a laid down U form, and paired grooves 28 are formed inside the frame 26.

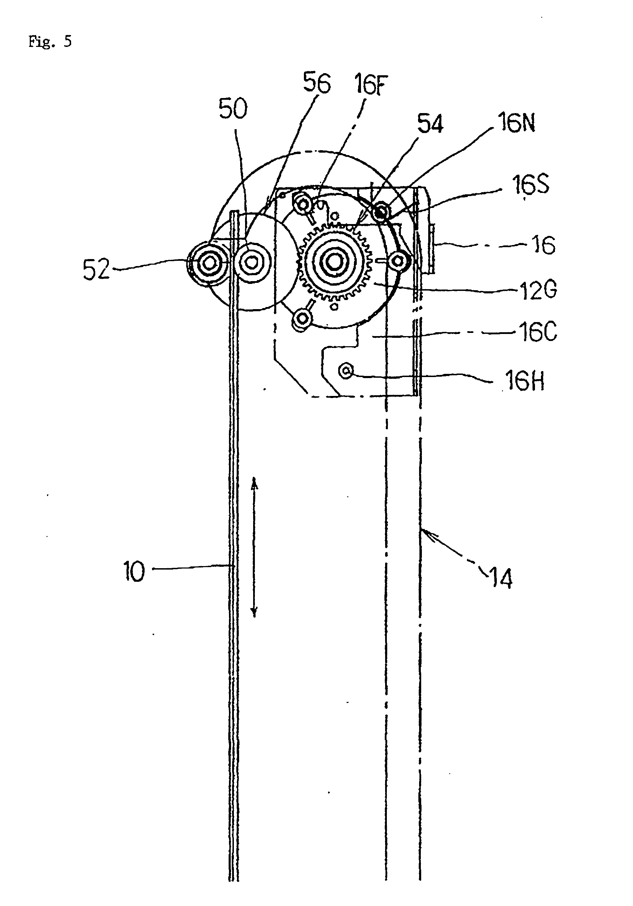

At the mounting of the cassette 130 the outside end of each shaft 42A and 42B is respectively inserted into each groove 28 of the frame. In addition, as explained before, the lift means has a pair of flexible racks 10. Each of the slender racks 10 is respectively fixed at one of the paired side walls of the frame 26 and extends in the upper direction (refer to Fig. 4). As shown in the lower part of Fig. 4 there is provided a stay 46 used for fixing the rack 10 on the frame 26. A rectangle board shown under frame 26 is a fixed base board 48. The lift means has a drive mechanism, as shown in Fig. 5. Fig. 5 shows the main section of a drive mechanism which constitutes a part of the lift means. This lift drive mechanism engages with the two racks 10 and moves the frame 26 in the upper direction. This lift drive mechanism has the electric motor 12 and a first gear mechanism fixed on the driving shaft of this motor 12. In addition, this lift drive mechanism has a second gear mechanism which respectively engages with the paired racks 10. The second gear mechanism consists of paired pinions 50 and rollers 52 for pressing, etc. And, as explained before, this lift drive mechanism has the lever 16.

The lever 16 freely engages the first gear mechanism with the second gear mechanism. As shown in the upper part of Fig. 5 a flat gear 54 with thirty teeth is fixed on the driving shaft of the electric motor 12 for lifting and a flat gear 56 with forty teeth freely engages with the gear 54. This gear 56 is fixed on the same shaft as the pinion 50. The pinion 50 engages with the flexible rack 10. The roller 52 presses the rack 10 which engages with the pinion 50. Further, an arrow which is shown in Fig. 5 shows the transfer of the rack 10 in the up and down directions.

Fig. 6 shows summarily the attraction means and delivery means enlarged. In the center of Fig. 6, there is shown the fan 18 for suction which is a fan motor equipment and constitutes the attraction means. The delivery means has a tire or roller 60 made of rubber. This roller 60 contacts the upper surface of a card body C and sends out this card body C which is sucked at the fan 18. And, the delivery means has rollers 22 and support rollers 22A for dispensing, resp. These rollers 22 and 22A sandwich and send out the card body C which is transported by the roller 60. In addition, the delivery means has inversion rollers 62 for preventing the double feed therefrom. This inversion rollers 62 engage with the support rollers 22A and contact with the underside of the transported card body C. When the card body C is dispensed, the inversion rollers 62 in this embodiment prevent two card bodies C from being sent out. And, the delivery means has drive means such as an electric motor 20 and a belt 64 and so on (refer to Fig. 6). Further, the belt 64 is extended on pulleys (not shown) which are arranged at the outside of the side board 6. This drive means rotates the roller 60 and the rollers 22 for dispensing in the same direction.

Further, the proposed arts by the applicant of this application may be used and employed for the above-mentioned attraction means and delivery means. For example, it is possible to use the technology described in Japanese Patent Publication 10-1235 (Japanese Patent Application 8-188006). The technology described in this publication is intended for dispensing thin sheet bodies such as paper money and telephone card, etc. And, this technology uses only paired rollers which send out a sheet body by holding, however, means corresponding to inversion roller 62 is not provided.

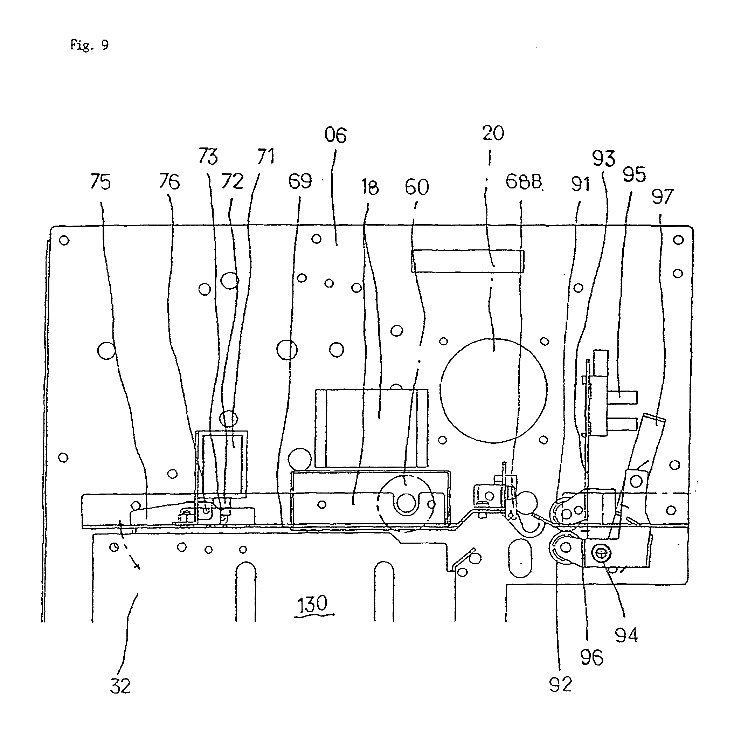

A small box 66 shown in the center of Fig. 6 is a small switch. The switch 66 is turned on by the small plate 44 (refer to Fig. 4). Namely, when cassette 130 is installed in the dispenser 100, the switch 66 is turned on and the dispensing operation is set in the stand-by. Near the switch 66 there is a light switch 68 of the actuator type, concretely the light switch 68 is a light sensor and a light interrupter. When the upper-most card body which is sucked at the fan comes to the desired position, the light switch 68 causes that the electric motor 12 is stopped. Near the dispensing rollers 22 and 22A a light switch 68B is provided (refer to Fig. 9). This light switch 68B causes that the fan 18 is stopped when the card body to be dispensed is inserted between the rollers 22 and 22A.

As explained before the substrate 70 for control is fixed by the stationary member 24. As described above, in this embodiment, a plurality of piled-up card bodies are upwardly transported by the lift means. Further, in this embodiment only the upper-most card body of a plurality of card bodies upwardly transported is sucked. In addition, the card body sucked is sent out by the dispensing means in this embodiment. As a result, in this embodiment each card body can be surely dispensed without damaging.

The lift means includes the racks 10, the electric motor 12, the frame 26, the grooves 28, the movable base 40, the shafts 42A and 42B, the pinion 50, the press roller 52, etc. The delivery means includes the roller 60, the rollers 22 and 22A, the inversion roller 62, the motor 20, the belt 64, etc. In this embodiment the cassette 130 is freely mounted/dismounted on the lift means in the dispenser 100 (refer to Fig. 4). Therefore, in this embodiment, it is possible to separately prepare the cassettes in accordance with the types and sizes, etc. of card bodies.

As a result, in this embodiment, when the type, etc. of card body shall be changed, the cassette in accordance with the change can be used immediately. And, this embodiment uses the cassette with free mounting/dismounting so that a large number of card bodies can be easily stored in a short time. By this embodiment, large convenience may be obtained in controlling various card bodies.

While the first embodiment according to this invention is further explained, other embodiments are explained herein.

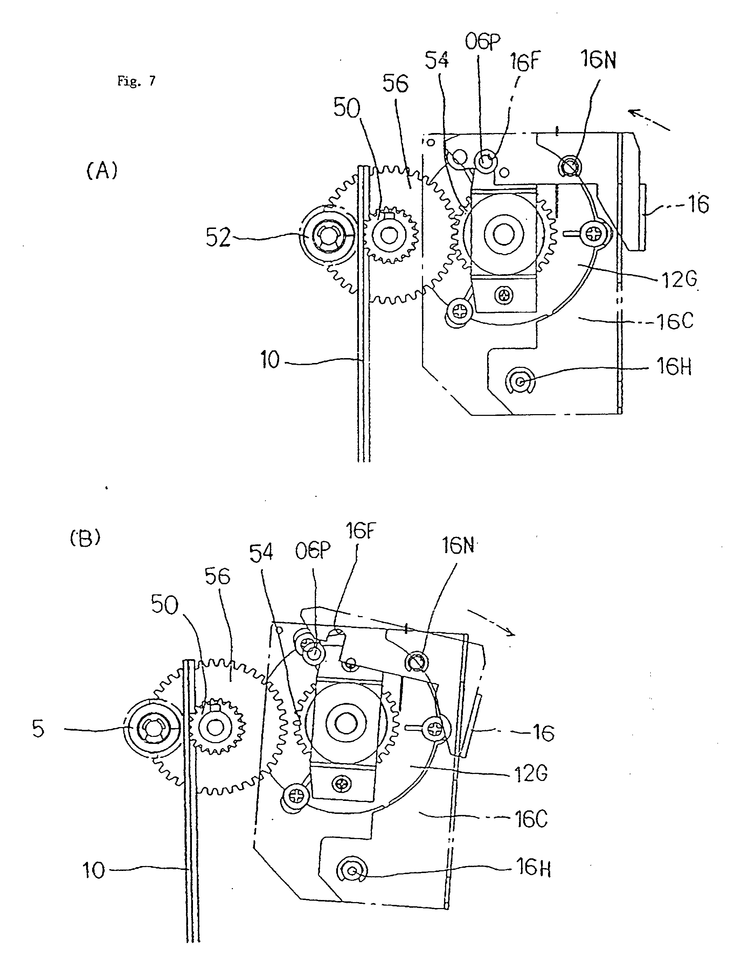

As it is clear from the preceding, Fig. 4 is an enlarged view showing the lift drive mechanism in Fig. 4 from the back. On the driving shaft of the electric motor 12 a small flat gear 54 is fixed and a deceleration gear train 12D is existing. These drive mechanism are housed integrally in a little large U-form case 16C (refer to Fig. 4). This case 16C is rotatably hinged at 16H between the side boards 6. The lever 16 for operating comprises a small pistol form and the center of the lever is hinged at 16N on the case 16C (refer to Fig. 7). A hook 16F is formed at the tip of the lever 16 (refer to Fig. 5). A small circle in the upper part of Fig. 7 is a protrusion 6P which is formed on the inside wall of the side board 6. This protrusion 6P can be freely meshed with the hook 16F. That is to say, the case 16C is swingable around the hinge shaft 16H within the dispenser 100.

When the hook 16F of the lever 16 engages with the protrusion 6P, the gear 54 will engage with the large gear 56 (refer to (A) in Fig. 7). When the lever 16 is pressed and pulled against a spring 16S (see Fig. 5), the hook 16F becomes disengaged from the protrusion 6P (refer to (B) of Fig. 7). In this case, the meshing between the small gear 54 and the large gear 56 will be disengaged as a result.

When the lever 16 is pushed against the weight of the case 16C, the hook 16F engages with the protrusion 6P. That is to say, the small gear 54 will engage with the large gear 56. Therefore, by operation of the lever 16, the control of the interlock and release between the racks 10 and the motor 12 is possible.

As shown in Fig. 2, when the cassette 130 is drawn from the dispenser 100, the lever 16 is manipulated. That is to say, the lever 16 is lowered and the small gear 54 is separated from the large gear 56, and then the frame 16 is lowered. In other words, when the small gear 54 and the large gear 56 are disengaged, the movable plate 40 is lowered. As a result, each outside end of the shafts 42A and 42B becomes off from cuts 28B (see Fig. 2) on the dispenser 100. It is, of course, an advantage that, when a spring is arranged on the hinge shaft 16H, the hook 16F may easily come off from the protrusion 6P. That is to say, it is possible to simply control the drive of racks 10 by the operation of the lever 16.

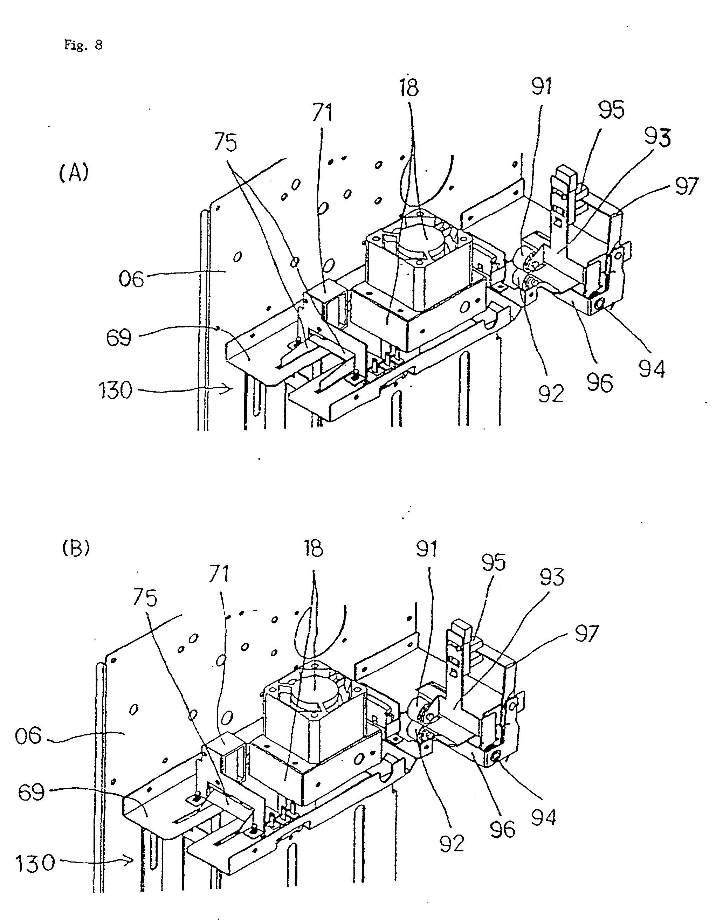

In Fig. 8, a card body displacement mechanism or staggering mechanism is shown, which smoothes dispensing of a card body. Concretely, it is shown the mechanism which pushes a little the tail edge of the upper-most card body which is piled up within the cassette 130. The above-mentioned card body displacement mechanism is arranged on the rear end portion of a little large board 69 for installing the fan 18. To begin with, a small solenoid 71 is installed on one side of the rear end portion of the mounting board 69. A small crossbar 73 is fixed on a plunger 72 of the solenoid 71, said plunger moving freely back and forth (refer to Fig. 9).

As shown in the left part of Fig. 8, there is a displacement piece 75 for a card body, the displacement piece 75 having a small U-shape and is laid. The center of the displacement piece 75 is arranged swingable around a little long hinge shaft 76 on the board 69 and is therefore swingably arranged on the board 69. In addition, an end part of the displacement piece 75 is coupled to the crossbar 73. The crossbar 73 extends into a long hole (not shown) provided in the end part of the displacement piece 75.

Thus, the plunger 72 is retracted when the solenoid 71 is switched on. As a result, the displacement piece 75 swings down around the hinge shaft 76 and abuts the tail part of a card body (refer to (B) of Fig. 8). When the solenoid 71 is switched off, the plunger 72 is extended. In this case, the displacement piece 75 swings up around the hinge shaft 76 and is stored on the mounting board 69 (refer to (A) of Fig. 8). Therefore, when the solenoid 71 is switched on/off, the displacement piece 75 will slightly strike the tail part of the card body.

In the right part of Fig. 9 a sensor mechanism for a card body is shown. By this sensor mechanism the number of sheets of card bodies sent out is detected, one sheet or two sheets, concretely. The sensor mechanism has small rollers 91 and 92 which hold one card body sent out. The upper roller 91 is arranged and freely rotated at an inner edge of a reversed T type mounting piece 93 (refer to Fig. 8). The outside edge of the mounting piece 93 is pivoted ad 94 on the sideboard 6. A light sensor 95 is installed at the center edge of the mounting piece 93. The bottom roller 92 is arranged and freely rotated at an inner edge of a mounting piece 96 formed as a lying L (refer to Fig. 8). The central portion of the mounting piece 96 is pivoted at 94 on the side board 6. At the outside edge of the mounting piece 96 a reversed L-shaped actuation piece 97 is pivoted and biased by a spring (not shown). This actuation piece 97 is for precisely adjusting in proportion to the thickness of the card body.

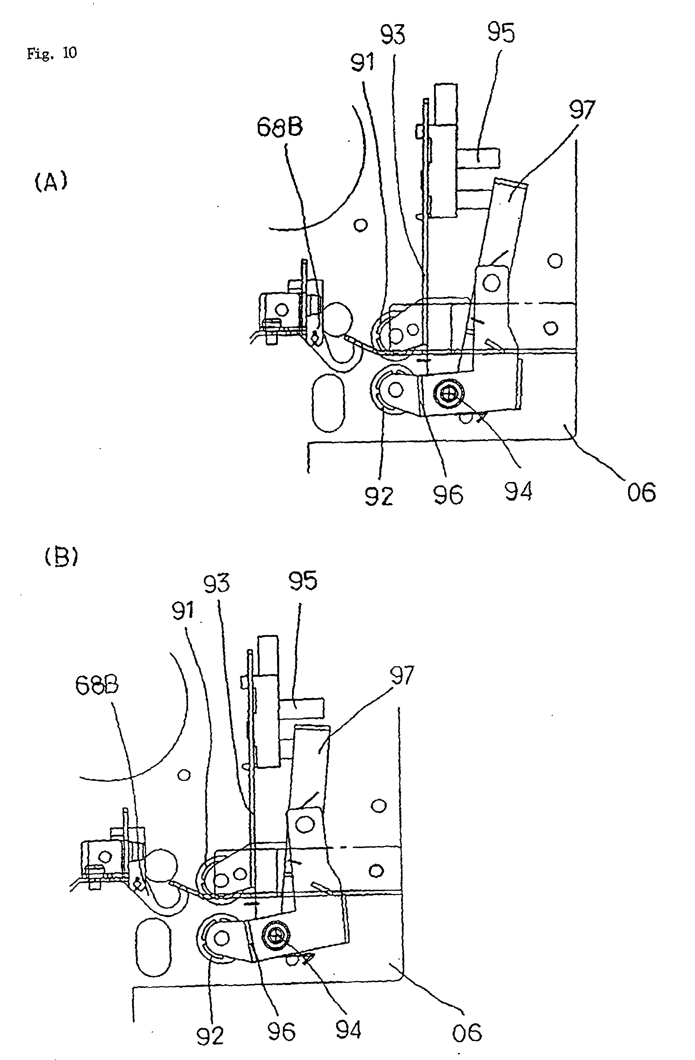

First of all, a card body driven away is sucked at the fan 18, and next, it is sent out by the roller 60 (refer to Fig. 9). The card body sent out by the roller 60 is sent between paired rollers 91 and 92. When the card body sent is one sheet, the bottom roller 92 is moved a little against a spring (not shown) (refer to (A) of Fig. 10). At this time, the actuation piece 97 is only moved a little and not detected by the light sensor 95. When the card body sent is two sheets, the bottom roller 92 is moved against a spring (not shown) (refer to (B) of Fig. 10). As a result, the actuation piece 97 is detected by the light sensor 95 and two sheets of the card body are detected. Further, the paired rollers 91 and 92 can be integrally moved around the pivot 94. Therefore, it is possible to surely detect two sheets of card body, even if the type of card body is changed. Concretely, two sheets of card body can be surely detected, even if thickness and size, etc. of the card body are changed.

As explained above, it is possible to surely distribute a little thick card bodies at each one sheet without damages. Especially, it is possible to surely distribute an IC card packed into a transparent film without damage. Further, cassettes can be used and therefore a large number of card bodies can be easily put thereinto at a short time. In addition, it is possible that convenience in the management of various card bodies is obtained.

## Claims

1. An elevator for a card body (C), comprising at least:
a flexible rack (10),
a driving means (12, 50, 52) comprising a pinion (50) engaging said rack (10) for moving the rack (10) in up
and down directions,
a roller (52) for pressing said rack (10) into engagement with the pinion (50) a frame (26) fixed to a lower portion of said rack (10), and a movable base (40) for carrying a card body (C), said base (40)
being removably arranged at the frame (26) for moving up and down with said rack (10).

2. An elevator as described in claim 1, **characterized in that**
the movable base (40) is mounted in a cassette (130) for a card body (C).

3. A dispenser for a card body (C) comprising at least
a flexible rack (10),
a driving means (12, 50, 52) for moving the rack (10) in up and down directions,
a movable base (40), which is arranged at the bottom end, for carrying a card body
a fan (18) for sucking the upper-most card body (C) on the movable base (40), and
a roller (60) for sending out the card body (C) which is sucked at the fan (18).

4. A dispenser as described in claim 3, **characterized in that**
the movable base (40) is removably arranged at the bottom end of the rack (10).

5. A dispenser as described in claims 3 or 4, **characterized in that** the movable base (40) is mounted in a cassette (130) for a card body (C).

## Patentansprüche

1. Eine Hubeinrichtung für einen Kartenkörper (C), die wenigstens aufweist:
eine flexible Zahnstange (10),
eine Antriebsvorrichtung (12, 50, 52), die ein Ritzel (50) aufweist, das mit der Zahnstange (10) in Eingriff steht, zum Bewegen der Zahnstange (10) in Richtungen nach oben und nach unten,
eine Walze (52) zum Anpressen der Zahnstange (10) in einen Eingriff mit dem Ritzel (50), wobei ein Rahmen (26) an einem unteren Abschnitt der Zahnstange (10) befestigt ist, und
eine bewegliche Basis (40), zum Tragen eines Kartenkörpers (C), wobei die Basis (40) entfernbar an dem Rahmen (26) angeordnet ist, zum nach oben und nach unten bewegen mit der Zahnstange (10).

2. Hubeinrichtung gemäß Anspruch 1, **dadurch gekennzeichnet, daß** die bewegliche Basis (40) in einer Kassette (130) für einen Kartenkörper (C) montiert ist.

3. Kartenausgabevorrichtung für einen Kartenkörper (C), die wenigstens aufweist
eine flexible Zahnstange (10),
eine Antriebsvorrichtung (12, 50, 52) zum Bewegen der Zahnstange (10) in Richtungen nach oben und nach unten,
eine'bewegliche Basis (40), die am Bodenende angeordnet ist, zum Tragen eines Kartenkörpers,
einen Lüfter (18) zum Ansaugen des am weitesten oben liegenden Kartenkörpers (C) auf der beweglichen Basis (40), und
eine Walze (60) zum Ausgeben des Kartenkörpers (C), der von dem Lüfter (18) angesaugt wird.

4. Ausgabevorrichtung gemäß Anspruch 3, **dadurch gekennzeichnet, daß** die bewegliche Basis (40) entfernbar am Bodenende der Zahnstange (10) angeordnet ist.

5. Ausgabevorrichtung wie in den Ansprüchen 3 oder 4 beschrieben, **dadurch gekennzeichnet, daß** die bewegliche Basis (40) in eine Kassette (130) für einen Kartenkörper (C) montiert ist.

## Revendications

1. Dispositif de levage pour un corps de carte (c), comprenant au moins :
une crémaillère flexible (10),
des moyens d'entraînement (12, 50, 52) comprenant un pignon (50) venant en prise avec ladite crémaillère (10) pour déplacer la crémaillère (10) dans les directions vers le haut et vers le bas,
un rouleau (52) pour presser ladite crémaillère (10) en prise avec le pignon (50),
un châssis (26) fixé à une partie inférieure de ladite crémaillère (10), et
une base mobile (40) four transporter un corps de carte (c), ladite base (40) étant agencée de manière démontable sur le châssis (26) pour se déplacer vers le haut et vers le bas avec ladite crémaillère (10).

2. Dispositif de levage selon la revendication 1, **caractérisé en ce que** la base mobile (40) est montée dans une cassette (130) pour un corps de carte (c).

3. Dispositif de distribution pour un corps de carte (c) comprenant au moins une crémaillère flexible (10),
des moyens d'entraînement (12, 50, 52) pour déplacer la crémaillère (10) dans les directions vers le haut et vers le bas,
une base mobile (40), qui est agencée sur l'extrémité inférieure, pour transporter un corps de carte,
un ventilateur (18) pour aspirer le corps de carte supérieur (c) sur la base mobile (40), et
un rouleau (60) pour envoyer en dehors de l'appareil le corps de carte (c) qui est aspiré par le ventilateur (18).

4. Dispositif de distribution selon la revendication 3, **caractérisé en ce que** la base mobile (40) est agencée de manière démontable à l'extrémité inférieure de la crémaillère (10).

5. Dispositif de distribution selon la revendication 3 ou 4, **caractérisé en ce que** la base mobile (40) est montée dans une cassette (130) pour un corps de carte (c).
